# FASCICULE DE BREVET EUROPEEN

(11) **EP 0 844 014 B1**
(45) Date de publication et mention de la délivrance du brevet: **16.06.2004**
(21) Numéro de dépôt: 97402846.6
(22) Date de dépôt: 26.11.1997
(51) Int. Cl.: B01D 53/56, F23G 5/00

(54) **Procédé de traitement d'un effluent gazeux issu de l'incinération des ordures ménagères, et installation associée**
Verfahren und Anlage zur Behandlung von bei der Hausmüllverbrennung freiwerdenden Gasen
Method of treating a gas derived from the incineration of domestic waste, and installation thereof

(30) Priorité: 26.11.1996 FR 9614471
(43) Date de publication de la demande: 27.05.1998
(73) Titulaire: Vinci Environnement, 92500 Rueil Malmaison (FR)
(72) Inventeur: Thiery, Daniel, 38550 Saint Maurice L'Exil (FR); Patte, Philippe, 54000 Nancy (FR)
(74) Mandataire: Derambure, Christian

(56) Documents cités:
- EP-A- 0 496 913
- DE-A- 3 545 317
- US-A- 5 191 845
- US-A- 5 410 973

## Description

L'invention est relative à un procédé de traitement d'un effluent gazeuse en vue de la réduction des oxydes d'azote ou "dénoxification".

Elle concerne en particulier la réduction des oxydes d'azote dans une installation d'incinération des ordures ménagères.

La technique d'incinération des ordures ménagères est bien connue dans son principe général.

Son objectif principal est d'éliminer les ordures ménagères, avec hygiène et commodité.

Elle peut aussi avoir d'autres fins spécifiques, par exemple l'incinération des boues aqueuses provenant des stations d'épuration d'eau.

Ainsi, le document FR-A-2.250.072 décrit une installation d'incinération de boues aqueuses, comportant une tour d'incinération, un pulvérisateur de boues aqueuses disposé dans cette tour et dirigé vers le bas, des moyens d'alimentation en air et combustible également disposés dans la tour, mais en-dessous du pulvérisateur, comprenant au moins un brûleur alimenté en combustible, des sources annexes de chaleur autres que le brûleur, constituées par des gicleurs alimentés uniquement en combustible, et disposé latéralement à la base de la tour, un dispositif d'introduction des déchets solides, ainsi que, au fond de la tour, une grille de combustion et un dispositif d'extraction.

On peut se référer également au document FR-A-2.123.635.

Selon un mode particulier de mise en oeuvre de la technique d'incinération des ordures ménagères, il est prévu un four d'incinération des ordures ménagères - tel qu'un four à grilles - en amont duquel sont associés des moyens d'amenée des ordures ménagères- tels qu'une trémie de chargement- et en aval duquel sont associés d'une part des moyens collecteurs des mâchefers, cendres et scories et d'autre part une chambre d'évacuation du gaz ou effluent de combustion.

De tels procédé et installation posent de nombreux problèmes inhérents à la technique d'incinération des ordures ménagères employée :
- alimentation et traitement préalables des ordures à incinérer ;
- structure du four ;
- récupération et traitement des mâchefers, cendres et scories ;
- dépoussièrage et épuration des effluents de combustion et, en particulier, dénoxification.

En effet, il est connu que l'incinération des ordures ménagères produit principalement du monoxyde d'azote NO, mais aussi du dioxyde d'azote NO₂ et du protoxyde d'azote N₂O. L'ensemble des oxydes d'azote est désigné par NOₓ. Et la réduction ou l'élimination des NOₓ est dite "dénoxification".

Ces oxydes d'azote ont des effets négatifs.

D'abord sur la santé humaine. Car ils provoquent notamment des troubles respiratoires.

Ensuite sur le milieu naturel : acidification des pluies et des sols, dépérissement des forêts, effets sur la couche d'ozone.

L'exploitation et le développement de la technique d'incinération des ordures ménagères imposent donc d'éliminer, ou du moins de réduire, la quantité de NOₓ dans les effluents gazeux de combustion.

Cette dénoxification est d'autant plus complexe, en l'occurence, que, par ailleurs, les effluents gazeux rejetés in fine dans l'atmosphère extérieure doivent être acceptables également quant aux cendres volantes, aux hydrocarbures, aux métaux lourds en acide chlorhydrique et autres constituants toxiques qu'ils comportent ou véhiculent.

Enfin, et s'agissant du traitement des ordures ménagères, il est essentiel que les procédés et dispositifs mis en oeuvre soient le moins coûteux possible -tant en investissement qu'en fonctionnement-, qu'ils soient fiables et simples à piloter et entretenir.

Par conséquent, la technique d'incinération des ordures ménagères non seulement pose un certain nombre de problèmes spécifiques mais également impose des contraintes elles aussi spécifiques.

On connaît aujourd'hui différentes techniques de dénoxification de gaz.

Selon une première technique connue, on maîtrise la combustion de manière à limiter les rejets de NOₓ, soit en maîtrisant la procédure de combustion générant les gaz comportant des NOₓ, soit en réglant le débit d'air entrant dans la chambre de combustion (voir par exemple EP-A-445.070).

Cette première technique, bien que peu coûteuse, a toutefois l'inconvénient de n'être pas d'une grande efficacité.

Elle est donc inadaptée aux exigences nouvelles de protection de la santé humaine et de l'environnement.

Selon le principe d'une seconde technique connue, on procède à une réduction chimique des NOₓ à l'aide d'ammoniac NH₃.

L'objectif de cette seconde technique est de former chimiquement, à partir des NOₓ, des produits ne présentant pas leurs inconvénients, à savoir l'azote N₂ et la vapeur d'eau H₂O.

Selon un premier mode de réalisation connu, la réduction sélective opérée est de type catalytique.

On peut se référer à cet égard aux documents FR-A-2.197.628, FR-A-2.197.629, FR-A-2.212.171, US-A-4.164.456, FR-A-2.290.242, FR-A-2.285.922, FR-A-2.257.325, FR-A-2.410.787 et FR-A-2.414.949.

Selon un second mode de réalisation connu, également utilisé, la réduction sélective opérée est de type non catalytique.

Dans le cas de la combustion de fuels pour chaudières alimentant des fours à combustion des industries pétrochimiques, il est proposé, selon les documents FR-A-2.290.241 et FR-A-2.290.243, d'éliminer les NOₓ en interceptant la flamme résultant de la combustion à l'aide d'un intercepteur de flamme et à introduire de l'ammoniac, éventuellement dilué, en une zone portée à une température comprise entre 700 et 1100°C en courant descendant de l'intercepteur, pour assurer le contact de l'ammoniac avec le gaz d'échappement produit par combustion.

Le document FR-A-2.373.327 vise l'application au cas des gaz de combustion provenant des chaudières et turbines à gaz pour centrale thermique.

Le document GB-A-1.576.832 concerne le cas de la combustion de fuels. Il décrit une réalisation particulière dans laquelle l'effluent de combustion comprenant des NOₓ et de l'oxygène, présente une première zone à température comprise entre 900 et 1000°C et une seconde zone à température comprise entre 700 et 900°C. Le taux en NOₓ dans l'effluent est diminué par l'addition de premier et second agents réducteurs respectivement dans la première et la seconde zones. Le premier agent réducteur consiste seulement en ammoniac (éventuellement mélangé avec un diluant inerte). Le second agent réducteur comprend de l'ammoniac et au moins un gaz réducteur (éventuellement mélangé avec un diluant inerte).

Le document FR-A-2.376.685 concerne l'application au cas de la combustion d'huiles minérales. Il décrit une réalisation particulière en deux étapes.

Le document EP-A-196.842 concerne l'application au cas d'effluents de combustion produits par des turbines à gaz. Le procédé est réalisé à une pression supérieure à la pression atmosphérique, pendant une durée comprise entre 2 et 75 millisecondes.

Le document WO-A-93/19837 concerne également une application spécifique et révèle que l'ammoniac est plus efficace s'il est dilué.

Le document WO-A-87/06853 prévoit une réalisation très particulière dans laquelle le flux gazeux est tourbillonnaire.

Les variantes connues destinées à des processus particuliers tels que ceux qui viennent d'être considérés ne sont pas applicables, de façon efficiente, au cas de l'incinération des ordures ménagères étant donné la spécificité de cette application.

Le document WO-A-89/07004 concerne un procédé de dénoxification en deux étapes. Le document WO-90/05000 qui se réfère au précédent concerne une buse d'injection permettant d'assurer le mélange d'un gaz porteur et d'un produit choisi dans le groupe comprenant notamment les précurseurs de NHi.

Le document US-A-5.098.680 se réfère à la vaporisation de l'ammoniac dans le cadre d'un processus de dénoxification.

Enfin, le document EP-A-496.913 prévoit que l'ammoniac utilisé dans le processus de dénoxification provient de flux dérivés du traitement des boues de stations d'épuration communales, à savoir, précisément, de l'eau surnatante ou surnageante d'une tour de putréfaction de boues.

L'invention vise, dans le cas de l'incinération des ordures ménagères, à amener la teneur en NOₓ des fumées rejetées dans l'atmosphère en-dessous du seuil aujourd'hui requis par les contraintes de santé publique et d'environnement.

L'invention vise simultanément à ne pas accroître et même à diminuer la nocivité ou le désagrément (par exemple odeurs) des différents rejets résultant du processus d'incinération d'ordures ménagères considéré.

Enfin, selon l'invention, la maîtrise de la teneur en NOₓ au-dessous du seuil admissible doit être réalisée, s'agissant de l'incinération d'ordures ménagères, de manière aussi peu coûteuse que possible -tant en investissement qu'en fonctionnement- et de façon fiable et simple tant en ce qui concerne le pilotage que l'entretien.

A cet effet et selon um premier aspect, l'invention concerne un procédé de traitement d'un effluent gazeux comportant des NOₓ issu de l'incinération des ordures ménagères en vue de sa dénoxification par réduction sélective non catalytique, dans lequel on introduit dans l'effluent gazeux à température comprise entre de l'ordre de 850° C et 1 000°C une composition chimique fonctionnelle comprenant des boues provenant du traitement des eaux usées urbaines ou des résidus de fabrication industrielle, ladite composition chimique se présentant sous forme pâteuse pour son introduction dans l'effluent gazeux, divisée en gouttes ou gouttelettes, de l'air ou un gaz vecteur de pulvérisation étant introduit dans la composition à cet effet.

Selon une réalisation, la composition comprend uniquement des boues provenant du traitement des eaux usées urbaines ou des résidus de fabrication industrielle.

Selon une réalisation, les boues ont subi un pré-traitement de déshydratation en vue de les épaissir jusqu'à la consistance pâteuse voulue, les matières sèches étant concentrées.

Selon une réalisation, la composition comprend également de l'eau ajoutée aux boues.

Selon une réalisation, la composition comprend également un composé comprenant une fonction N-H, tel qu'urée, amines primaires, amines secondaires ou de l'ammoniac.

Selon une réalisation, la composition comporte, en poids, de l'ordre de 1 à 6 %, plus spécialement de l'ordre de 2 % d'ammoniac NH₃ ou équivalent considéré à 22°B.

Selon une réalisation les gouttes ou gouttelettes, ou une partie notable d'entre elles, ont un diamètre de l'ordre de 150 à 500 µm.

Selon une réalisation les boues comprennent, en poids, de l'ordre de 70 à 90 %, plus spécialement de l'ordre de 80 % d'eau et de l'ordre de 10 à 30 %, plus spécialement de l'ordre de 20 %, de matières sèches.

Selon une réalisation, les matières sèches des boues comprennent, en poids, de l'ordre de 50 à 60 % de matières organiques et de l'ordre de 40 à 50 % de matières minérales inertes.

Selon une réalisation, l'effluent gazeux suit un flux généralement ascendant et unidirectionnel et la composition chimique fonctionnelle y est introduite selon un flux généralement descendant, à contre-courant du flux de l'effluent gazeux.

Selon une réalisation, la composition chimique fonctionnelle est pulvérisée pneumatiquement au moyen d'un gaz vecteur de pulvérisation tel que de l'air comprimé.

Selon une réalisation on introduit dans l'effluent gazeux essentiellement la composition chimique fonctionnelle , éventuellement au moyen d'air comprimé ou d'un gaz vecteur de pulvérisation, mais sans apport d'hydrogène extérieur.

Selon une réalisation, on introduit la composition chimique fonctionnelle dans une zone où le gradient de température de l'effluent gazeux est faible.

Selon une réalisation, on introduit de l'ordre de 20 à 100 kg de matières sèches de boues par tonne d'ordures ménagères à incinérer.

Selon une réalisation, on introduit de l'ordre de 30 à 60 kg, notamment de l'ordre de 32 kg, de matières sèches de boues par tonnes d'ordures ménagères à incinérer.

Selon une réalisalion, on introduit la composition chimique fonctionnelle dans l'effluent gazeux en continu.

Selon une réalisalion, on introduit la composition chimique fonctionnelle dans l'effluent gazeux de façon discontinue pendant certaines phases.

Selon une réalisalion, dans les phases durant lesquelles on n'introduit pas de composition chimique fonctionnelle, on introduit de l'ammoniac ou équivalent.

Selon une réalisalion, on pré-traite les boues avant injection, notamment par centrifugation, afin de les déshydrater et les épaissir jusqu'à la consistance pâteuse et la teneur en matières sèches voulues.

Selon une réalisalion, on mesure la teneur de l'effluent gazeux en NOₓ en aval de l'introduction de la composition chimique fonctionnelle une fois que celle-ci a été opérante et on ajuste en conséquence la teneur des différents corps ou agents de la composition chimique fonctionnelle.

Selon une réalisalion, on amène la teneur de l'effluent gazeux en NOₓ jusqu'à une valeur de l'ordre de 50mg NO₂ par Nm³ sec d'effluent.

Selon un deuxième aspect, l'invention concerne un procédé d'incinération des ordures ménagères dans lequel on amène les ordures ménagères à incinérer dans un four où elle sont incinérées et dans lequel on collecte l'effluent gazeux issu de l'incinération des ordures ménagère dans une tour en sortie de four, on procède à un traitement de l'effluent gazeux par le procédé de traitement décrit ci-dessus.

Selon une réalisalion on met en oeuvre le procédé de traitement jusqu'à réduire la teneur en NOₓ de l'effluent gazeux de l'ordre de 80 % en sortie de tour, par rapport à la teneur juste après l'incinération.

Selon un troisième aspect, l'invention concerne une installation de traitement d'un effluent gazeux, provenant en particulier d'une installation d'incinération des ordures ménagères ou autres déchets, pour la mise en oeuvre du procédé d'incinération décrit ci-dessus, du type comprenant :
- une amenée d'ordures ménagères,
- un four d'incinération des ordures ménagères ,
- une évacuation de scories,
- et des moyens de collecte et de traitement de l'effluent gazeux, comprenant une tour en sortie de four dans laquelle se trouvent, au moins lors du fonctionnement de l'installation, des moyens d'introduction d'une composition chimique fonctionnelle en sortie de four et d'amont en aval sont agencés en premier lieu une chaudière, un électrofiltre, un échangeur condenseur et une cheminée ; en deuxième lieu des moyens de réfrigération ; et en troisième lieu des moyens d'évacuation des scories et des fines.

Selon une réalisation, les moyens d'introduction d'une composition chimique fonctionnelle sont des moyens de pulvérisation.

Selon une réalisation, les moyens d'introduction/pulvérisation, à savoir les organes de pulvérisation, sont dirigés vers le bas, là où se trouve le four.

Selon une réalisation, les moyens d'introduction/pulvérisation, à savoir les organes de pulvérisation, sont écartés du four, à savoir de sa sole .

Selon une réalisation, les moyens d'introduction/pulvérisation sont agencés d'une part selon une zone ponctuelle ou linéaire ou surfacique, d'autre part selon un ou plusieurs étages de la tour.

Selon une réalisation, les moyens d'introduction/pulvérisation sont agencés de manière à être escamotables d'une position normale d'utilisation où ils sont placés, au moins en ce qui concerne les organes de pulvérisation dans la tour , à une position escamotée notamment d'entretien ou lorsque l'installation est à l'arrêt, à l'extérieur de la tour.

Selon une réalisation, les moyens de pulvérisation, à savoir les organes de pulvérisation, sont agencés de manière coulissante sensiblement radialement par rapport à l'axe de la tour.

Selon une réalisation, les moyens d'introduction/pulvérisation comprennent au moins une canne, terminée d'un côté par une partie extrême recourbée pourvue d'organes de pulvérisation et comportant du côté opposé des raccords pour des conduits des moyens d'amenée des corps ou agents de la composition chimique fonctionnelle et de l'air, ou plus généralement du gaz vecteur de pulvérisation.

Selon une réalisation, les organes de pulvérisation assurent une pulvérisation sous forme d'un cône ouvert assurant une répartition spatiale convenablement homogène de la composition chimique fonctionnelle dans la zone de la tour où elle est introduite dans l'effluent gazeux.

Selon une réalisation, l'installation comporte des moyens de déplacement, notamment de coulissement, des moyens de pulvérisation entre leur position d'utilisation et leur position escamotée.

Selon une réalisation, les moyens de déplacement sont asservis à la marche et à l'arrêt de l'installation.

Selon une réalisation, l'intallation comporte une canne coudée.

Selon une réalisation, aux moyens de pulvérisation sont associés des moyens de protection thermique et des moyens de protection du colmatage.

Selon une réalisation, les conduits des moyens d'amenée sont déformables ou articulés en tout ou partie.

Selon une réalisation, aux moyens d'introduction/pulvérisation sont associés des moyens de stockage et d'amenée de boues provenant du traitement des eaux usées urbaines ou des résidus de fabrication industrielle et des moyens d'amenée d'un gaz vecteur de pulvérisation tel que l'air comprimé.

Selon une réalisation, l'installation comporte des moyens de pré-traitement des boues afin de les déshydrater jusqu'à la consistance pâteuse et voulue afin d'obtenir la teneur en matières sèches et voulues, tels qu'une centrifugeuse.

Selon une réalisation, aux moyens d'introduction/pulvérisation sont associés des moyens de stockage/amenée d'eau et/ou d'ammoniac ou équivalent.

Selon une réalisation, aux moyens de stockage/d'amenée de boues, d'air comprimé ou équivalent, d'eau, d'ammoniac ou équivalent sont associés des vannes et clapets d'arrêt ou de réglage des débits respectifs de manière à permettre d'ajuster la composition de la composition chimique fonctionnelle.

Selon une réalisation, l'installation comporte des moyens aptes à mesurer la teneur de l'effluent gazeux en NOₓ en aval des moyens de pulvérisation, couplés aux vannes et clapets d'arrêt ou de réglage des débits en vue d'ajuster la composition de la composition chimique fonctionnelle.

Selon une réalisation, l'installation comporte également un bac d'évacuation des eaux de rinçage des moyens d'introduction/pulvérisation situé à l'extérieur de la tour , contre elle, à proximité immédiate et en-dessous des moyens d'introduction/ pulvérisation , notamment des organes de pulvérisation en position escamotée.

Selon une réalisation, l'installation est couplée et combinée à une installation de traitement des eaux usées urbaines ou des résidus de fabrication industrielle, cette dernière installation comprend des moyens de prélèvement des boues associées aux moyens de stockage et d'amenée des boues, respectivement aux moyens de pré-traitement par déshydratation, de l'installation d'incinération.

L'invention sera bien comprise grâce à la description qui suivra d'un mode de réalisation particulier d'incinération d'ordures ménagères en référence aux dessins annexés dans lesquels :
- les figures 1A, 1B et 1C sont trois schémas destinés à être associés les uns aux autres dans cet ordre, illustrant, ainsi associés, le procédé et l'installation d'incinération des ordures ménagères selon l'invention. La sortie I1 de la figure 1A correspond à l'entrée I1 de la figure 1B. L'entrée I2 de la figure 1A correspond à la sortie I2 de la figure 1B. La sortie I3 de la figure 1B correspond à l'entrée I3 de la figure 1C.
- La figure 2 est une vue partielle, à plus grande échelle, en coupe longitudinale, selon un plan radial, de la tour de l'installation représentée sur la figure 1A, illustrant les moyens d'introduction/pulvérisation dans leur position normale de travail (traits pleins) et escamotée (tiretés).
- La figure 3 est un schéma des moyens d'introduction/pulvérisation.
- La figure 4 est un graphe donnant en abscisses le temps et en ordonnées la concentration en NOₓ, selon des phases φA d'introduction de boues dans la tour et φB de non introduction de boues.

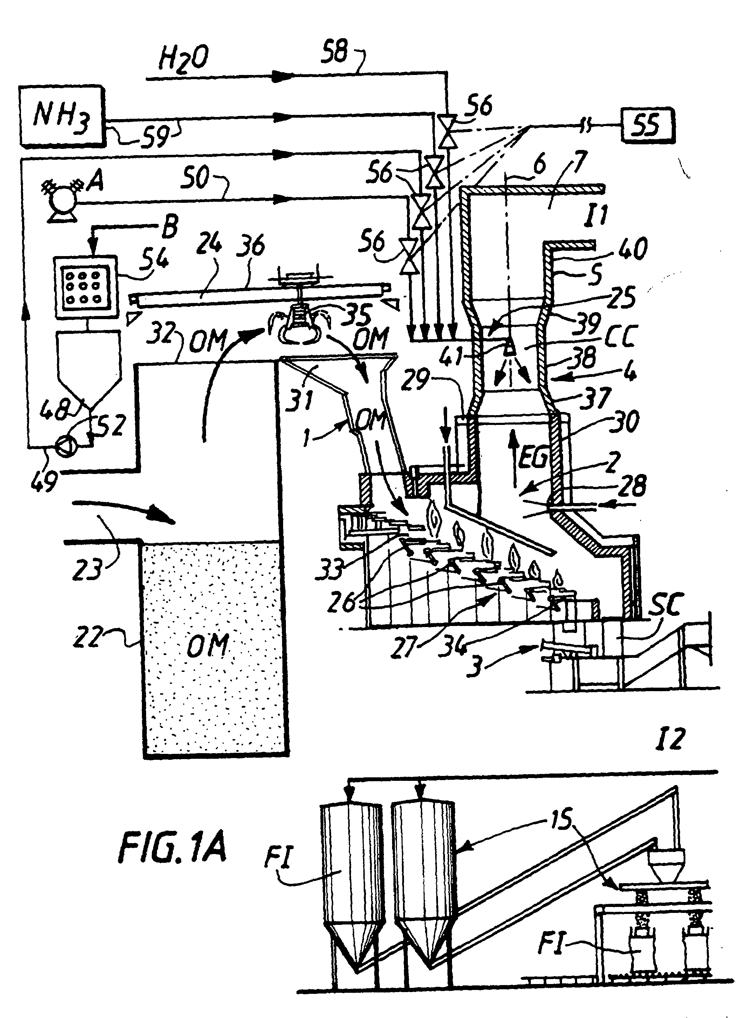

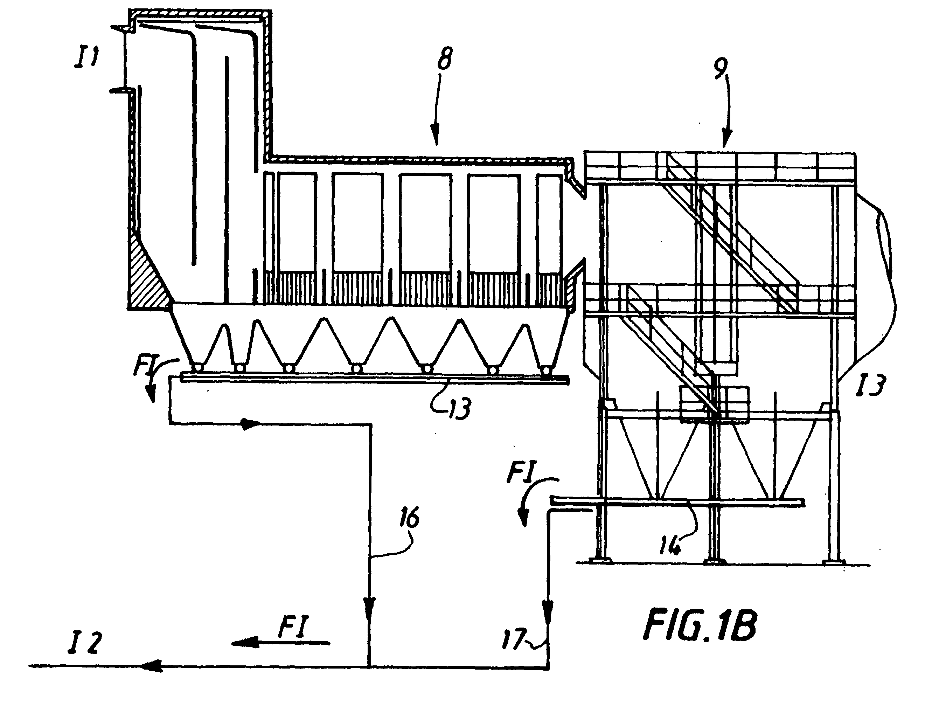

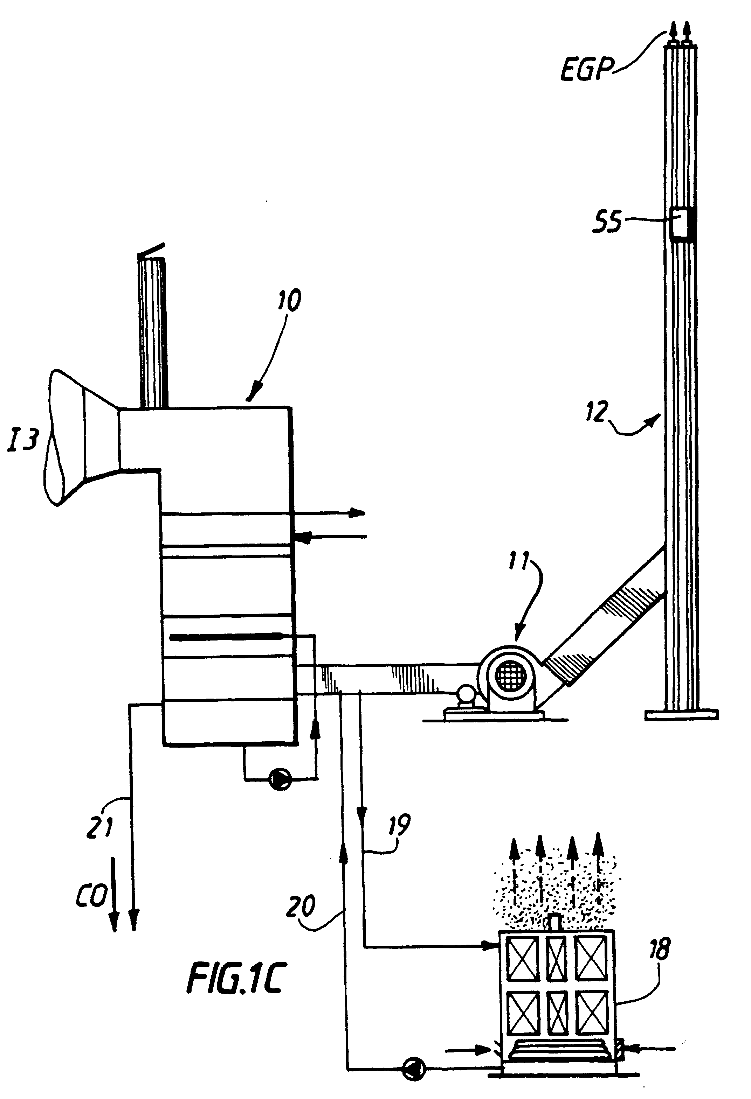

Une installation d'incinération d'ordures ménagères conforme à l'invention est représentée schématiquement sur les figures 1A, 1B et 1C. Ces mêmes figures illustrent le procédé d'incinération d'ordures ménagères selon l'invention mis en oeuvre par l'installation en question.

L'installation comporte une amenée 1 d'ordures ménagères (OM), un four ou foyer 2 d'incinération de celles-ci, une évacuation 3 des mâchefers, ordures et scories (SC) produites par l'incinération des ordures ménagères (OM), située en-dessous du four 1, des moyens 4 de collecte et de traitement de l'effluent gazeux (EG) issu de l'incinération des ordures ménagères (OM).

Les moyens 4 comprennent une tour 5, d'axe 6 vertical, placée en sortie du four 2.

La tour 5 comporte, en partie haute, une sortie 7, en l'occurence latérale (référence I1 sur la figure 1A).

A partir de la sortie 7 de la tour 5, l'installation telle qu'elle est représentée, comporte d'amont en aval et convenablement associés entre eux une chaudière 8, un électrofiltre 9 (dont la sortie porte la référence I3 sur la figure 1B), un échangeur-condenseur 10 (dont l'entrée porte la référence I3 sur la figure 1C), un ventilateur 11 assurant le tirage nécessaire à l'évacuation de l'effluent gazeux traité (EGP) par une cheminée 12.

En sorties 13 et 14 de la chaudière 8 et de l'electrofiltre 9 sont associés des moyens 15 d'évacuation des fines (FI) via des lignes d'évacuation 16, 17 appropriées, pouvant être pour partie communes (référence I2 sur les figures 1A et 1B).

Les moyens 15 d'évacuation des fines (FI) peuvent faire l'objet de différentes variantes de réalisation : silo de stockage, ensachage, évacuation en continu ou par lots, etc.

La quantité de fines (FI) récupérées présente un volume très réduit par rapport aux volumes d'ordures ménagères (OM) ou de boues (B) utilisées.

A l'échangeur-condenseur 10 sont associés d'une part des moyens 18 de réfrigération via des lignes de sortie 19 et de retour 20 et d'autre part une évacuation 21 des condensats (CO).

Par ailleurs, sont associés à l'amenée 1 des ordures ménagères (OM), dans la réalisation représentée, une fosse 22 de stockage de ces ordures ménagères (OM), une arrivée 23 permettant de déverser les ordures ménagères (OM) dans la fosse 22 - tel qu'un quai de déchargement de camions de collecte - et des moyens 24 de transbordement des ordures ménagères (OM) de la fosse 22 où elles sont en attente vers l'amenée 1.

L'installation comprend également des moyens 25 d'introduction, et en l'occurence de pulvérisation, d'une composition chimique fonctionnelle (CC) à l'état pâteux, dans le flux d'effluent gazeux (EG) s'écoulant dans la tour 5 et issu de l'incinération des ordures ménagères (OM).

Aux moyens d'introduction/pulvérisation 25 sont associés des moyens de commande, de réglage.

Une installation d'incinération d'ordures ménagères de ce type peut être implantée à proximité d'un centre urbain étant donné que ses rejets sont traités pour éviter leur impact négatif sur la santé humaine et l'environnement.

Cela est d'autant plus vrai que la conception en hauteur de l'ensemble four 2-tour 5 ne nécessite qu'une faible emprise au sol.

Une telle localisation de l'installation est avantageuse car elle permet d'éviter une noria de camions de collecte d'ordures ménagères sur de grandes distances.

Cette localisation est d'autant plus avantageuse que, par ailleurs, la composition fonctionnelle (CC), spécialement destinée à traiter l'effluent gazeux (EG) issu de l'incinération des ordures ménagères (OM), comporte - ou même est constituée - de boues (B) provenant du traitement des eaux usées urbaines ou des résidus de fabrication industrielle.

Par conséquent, l'installation d'incinération d'ordures ménagères considérée peut être implantée à proximité et même être couplée et combinée à une installation de traitement d'eaux usées urbaines ou des résidus de fabrication industrielle. Dans ce cas cette dernière installation comprend des moyens de prélèvement de boues associés - via des pompes par exemple - aux moyens de stockage et d'amenée des boues, sur lesquels on revient par la suite, respectivement aux moyens de pré-traitement de ces boues par déshydratation faisant partie de l'installation d'incinération.

Bien évidemment, l'installation d'incinération d'ordures ménagères comporte également les moyens de mesure, les moyens de contrôle, les moyens de commande, les moyens de sécurité nécessaires ainsi que les locaux techniques adaptés.

Le four ou foyer 2 forme la partie basse de la tour 5.

Dans la réalisation représentée, le four 2 comporte une série de grilles 26 horizontales, superposées mais décalées horizontalement les unes par rapport aux autres, montées à coulissement horizontal alternatif, définissant une sole 27 inclinée de haut en bas, depuis l'amenée 1 jusqu'à l'évacuation 3.

Le four ou foyer 2 comprend également un ou généralement plusieurs brûleurs 28 alimentés en fuel, en gaz de récupération ou autre comburant et une ou généralement plusieurs amenées 29 d'air ou de gaz chauds appropriés à la combustion souhaitée.

Ces brûleurs 28 et amenées 29 sont représentés de façon purement schématique et indicative.

Dans un four ou foyer 2 tel qu'il vient d'être décrit, les flammes se développent au-dessus des grilles 26. Ces flammes sont intenses vers la partie supérieure 33 de la sole 27 et meurent dans la partie inférieure 34.

Le four 2 comporte, au-dessus de la partie médiane de la sole 27, une grande virole 30 de collecte et d'évacuation de l'effluent gazeux (EG), formant le soubassement de la tour 5 qu'elle prolonge coaxialement vers le bas.

L'amenée 1 des ordures ménagères (OM), formant trémie, est disposée à côté de la virole 30 et écartée d'elle. Elle s'étend, en étant inclinée, depuis son entrée 31 qui peut être coplanaire à l'ouverture de sortie supérieure 32 de la fosse 22 jusqu'au four 2 au voisinage de la partie extrême supérieure 33 de la sole 27.

L'évacuation 3 des mâchefers, cendres ou scories (SC) est disposée du côté opposé à l'amenée 1 en étant attenante à la partie extrême inférieure 34 de la sole 27.

La quantité de mâchefers, cendres ou scories (SC) produites est réduite comparativement aux quantités d'ordures ménagères (OM) traitées. Ces mâchefers, cendres ou scories (SC) ne posent pas de problème majeur de stockage, d'évacuation ou de pollution.

Les moyens de transbordement 24 peuvent comporter un grapin 35 monté mobile d'une part verticalement, d'autre part horizontalement, grâce à un pont roulant 36 situé au-dessus des entrée et ouverture 31, 32.

Les ensembles 24, 35, 36 sont mobiles. Ils sont situés cependant à mi-hauteur de l'installation.

Par ailleurs, toutes les parties de l'installation à haute température sont fixes.

Il en résulte que la fiabilité et l'entretien de l'installation en sont respectivement augmentés et facilités.

La tour 5, métallique, est garnie intérieurement d'isolants et de réfractaires adaptés à l'incinération des ordures ménagères (OM), ainsi qu'à la pulvérisation de la composition fonctionnelle (CC).

Dans la réalisation représentée, la tour 5 comporte de bas en haut et successivement, une partie inférieure 37 en forme générale de tronc de cône convergent, attenante à et prolongeant la virole 30 ; une partie médiane 38 de forme générale cylindrique et de plus petit diamètre ; une partie intermédiaire 39 en forme générale de tronc de cône divergent ; et enfin une partie supérieure 40 où se trouve la sortie 7, de plus grand diamètre, correspondant sensiblement à celui de la virole 30.

Dans la réalisation représentée, la tour 5 a une hauteur de l'ordre de 11,80 à 12 m, les parties 38 et 40 ayant respectivement des diamètres intérieurs de l'ordre de 3,60 m et 4,40 m.

La tour 5 est dimensionnée, selon les capacités de l'installation de manière que l'effluent gazeux (EG) y séjourne pendant une durée d'au moins deux secondes environ après avoir été intercepté par la composition chimique fonctionnelle (CC) pulvérisée.

A cet effet, les moyens 25 d'introduction/pulvérisation sont installés - s'agissant de leurs organes de pulvérisation 41 - dans la partie médiane 38 de la tour 5, agencée dans cette zone en venturi (parties convergente 37, cylindrique 38, divergente 39).

Les moyens 25 sont, s'agissant des organes de pulvérisation 41 qu'ils comportent, dirigés vers le bas en direction de la sole 27 du four ou foyer 2.

Ainsi, alors que l'effluent gazeux (EG) collecté et canalisé par la virole 30 et la tour 5 suit un flux généralement ascendant et unidirectionnel, la composition fonctionnelle CC est introduite/pulvérisée dans l'effluent EG à contre-courant, selon un flux généralement descendant.

Les moyens d'introduction/pulvérisation 25, à savoir les organes 41, sont écartés à distance du four ou foyer 2 et, plus particulièrement, de la sole 27.

Par conséquent, la composition chimique fonctionnelle (CC), lorsqu'elle est introduite/pulvérisée est cachée des flammes du four 2 et ne subit aucune réaction d'oxydation indésirable. La composition chimique fonctionnelle (CC) peut ainsi être utilisée de la façon la plus efficiente.

Les moyens d'introduction/pulvérisation 25, à savoir les organes de pulvérisation 41, peuvent faire l'objet de différentes variantes de réalisation. Ainsi, ils peuvent être agencés d'une part selon une zone ponctuelle ou linéaire ou surfacique, d'autre part selon un ou plusieurs étages de la tour 5.

On entend ici par zone ponctuelle une zone de faible surface, par opposition à une zone surfacique qui, elle, est étendue.

L'emploi, dans la réalisation considérée, comme moyens d'introduction 25, de moyens de pulvérisation, permet d'injecter la composition chimique fonctionnelle (CC), bien qu'elle soit à l'état pâteux et comporte même des matières à l'état solide, sous forme de gouttes ou de gouttelettes.

A cet effet, on met en oeuvre un gaz vecteur de pulvérisation tel que de l'air comprimé basse pression (A).

Ces gouttes ou gouttelettes, ou du moins une partie notable d'entre elles, ont, dans la réalisation plus spécialement décrite, un diamètre de l'ordre de 150 à 500 µm.

Les moyens de pulvérisation 25 et notamment les organes 41 sont agencés de manière à assurer une répartition spatiale convenablement homogène de la composition chimique fonctionnelle (CC) dans la zone de la tour 5 où la composition fonctionnelle (CC) est introduite dans l'effluent gazeux (EG).

Par exemple, les organes 41 assurent une pulvérisation de la composition chimique fonctionnelle (CC) sous forme d'un cône ouvert.

Dans la réalisation représentée, les moyens de pulvérisation 25 et plus spécialement les organes 41 sont agencés de manière à être escamotables d'une position normale d'utilisation où ils sont placés dans la tour 5, à une position escamotée, notamment d'entretien ou lorsque l'installation est arrêtée, à l'extérieur mais à proximité de la tour 5.

Dans une réalisation correspondant au dessin représenté, les moyens de pulvérisation 25 sont agencés de manière coulissante sensiblement radialement par rapport à l'axe 6 de la tour 5.

Il est alors prévu des moyens 42 de coulissement tels qu'une glissière ou un monorail 43 supportant un ou des chariots 44.

Le déplacement des moyens de pulvérisation 25 peut être manuel, la préhension étant assurée sur une canne 45 faisant partie des moyens 25.

Le déplacement peut également être motorisé.

Le cas échéant, le déplacement des moyens de pulvérisation 25 est asservi de façon automatique à la marche et à l'arrêt de l'installation, notamment de la pulvérisation de la composition chimique fonctionnelle.

Une porte 46 ménagée dans la paroi de la tour 5 permet le passage de la partie extrême recourbée 47 de la canne 45 pourvue des organes de pulvérisation 41.

Dans la réalisation représentée, il est prévu une seule canne 45, les organes 41 étant de type ponctuel et placés, en position de fonctionnement, dans l'axe 6.

Aux moyens de pulvérisation 25 peuvent être associés des moyens de protection thermique, des moyens de prévention du colmatage et des moyens de sécurité.

Les moyens de pulvérisation 25 qui viennent d'être décrits peuvent être utilisés avec la plus grande souplesse. Leur démarrage est rapide. Leur arrêt est instantané ou quasi-instantané. Cette souplesse permet, par conséquent, les adaptations à tous les modes d'exploitation souhaités (par exemple fonctionnement continu ou discontinu).

Les moyens de pulvérisation 25 comprennent, sur la canne 45 et du côté opposé à la partie recourbée ou coudée 47 et aux organes 41, des raccords tels que 51, 57 pour l'amenée des différents corps et agents constituant la composition chimique fonctionnelle (CC), s'ils n'ont pas été mélangés avant, ainsi que pour le gaz vecteur de pulvérisation (A).

Sur les raccords tels que 51, 57 précédemment mentionnés sont branchés des conduits d'amenée tels que ceux des moyens d'amenée 49, 50, lesquels sont déformables et/ou articulés en tout ou partie compte-tenu de la mobilité, notamment le coulissement, des moyens de pulvérisation 25.

Aux moyens d'introduction/pulvérisation 25 sont associés des moyens de stockage 48 et d'amenée 49 de boues (B) provenant du traitement des eaux usées urbaines ou des résidus de fabrication industrielle ainsi que des moyens d'amenée 50 d'un gaz vecteur de pulvérisation tel que l'air comprimé (A).

Les moyens de stockage 48 peuvent se présenter sous la forme d'une bâche à boues ou équivalent.

Les moyens d'amenée 49 comportent des conduits et se terminent par un raccord 51 à l'extrémité de la canne 45 opposée aux organes de pulvérisation 41. Une pompe 52 amène la boue (B) des moyens en stockage 48 à la canne 45.

Le flux de boue (B) est, dans la réalisation considérée, amené axialement dans la canne 45 dans un tube central 53 dont celle-ci est pourvue.

Les boues considérées (B) forment une partie essentielle ou constituent la composition chimique fonctionnelle (CC).

Le cas échéant, les boues (B) sont concentrées en matières sèches et rendues plus pâteuses ou au contraire diluées dans de l'eau, ajoutée à cette fin.

L'eau est par ailleurs nécessaire au nettoyage des moyens d'introduction/pulvérisation 25.

Dans tous les cas, le caractère pâteux des boues (B) et leur teneur en matières sèches sont maîtrisés pour que le procédé mis en oeuvre procure l'efficacité maximale.

A cet effet, il peut être associé en amont des moyens de stockage 48, des moyens 54 de pré-traitement des boues (B) afin de les épaissir jusqu'à la consistance pâteuse et la teneur en matières sèches voulues. Ces moyens 54 de déshydratation peuvent être une centrifugeuse. D'autres moyens analogues peuvent être envisagés.

Les boues (B) considérées comprennent, en poids, de l'ordre de 70 à 90%, plus spécialement de l'ordre de 80% d'eau et de l'ordre de 10 à 30%, plus spécialement de l'ordre de 20%, de matières sèches. Ces matières sèches comprennent, en poids, de l'ordre de 50 à 60% de matières organiques et de l'ordre de 40 à 50% de matières minérales inertes.

Ainsi qu'il a été indiqué, les boues (B) comprennent des matières à l'état solide.

Les boues (B) utilisées, convenables pour la mise en oeuvre du procédé et de l'installation sont, notamment les suivantes :
- boues de décantation d'eaux usées urbaines,
- boues activées de station d'épuration d'eaux usées urbaines,
- boues de lavage de filtre,
- boues de floculation et décantation d'eaux potables,
- boues de décarbonisation d'eaux potables ou industrielles,
- boues provenant de neutralisation telle que les eaux de décapage, de traitement de surface,
- boues provenant de précipitation pour décontamination d'eaux toxiques,
- boues de décantation avec floculation d'eaux usées provenant de teinturerie, papeterie, tannerie, pharmacie, industrie alimentaire, industrie laitière.

Le débit des boues (B) utilisées et plus généralement de la composition chimique fonctionnelle (CC) est réglé en fonction notamment de la température de l'effluent gazeux (EG) à la partie supérieure de la tour 5 (sortie 7).

Les matières organiques contenues dans les boues (B) constituent en effet un combustible d'appoint, permettant ainsi d'assurer dans la zone de pulvérisation des boues (B), depuis le bas de la tour 5 jusqu'à son sommet, une température comprise entre 950 et 880°C environ.

Par ailleurs, selon la représentation considérée, on mesure la teneur de l'effluent gazeux (EG) en NOₓ en aval de l'introduction/pulvérisation de la composition chimique fonctionnelle (CC) et notamment au voisinage de la sortie 7 et on ajuste en conséquence les teneurs respectives des différents corps ou agents de la composition chimique fonctionnelle (CC). Par exemple, un capteur 55 est monté dans cheminée 12 et permet de mesurer la teneur de l'effluent gazeux, en NOₓ au niveau de son rejet dans l'atmosphère. Ce capteur 55 est couplé par un logiciel de commande approprié à des vannes et clapets 56 d'arrêt ou de réglage des débits associés aux différentes amenées des moyens de pulvérisation 25.

Les moyens d'amenée 50 peuvent se présenter sous la forme d'un ventilateur ou surpresseur associé à des conduits se terminant par un raccord 57 proche du raccord 51 mais situé légèrement en aval de ce dernier, par rapport au sens d'écoulement de la composition chimique fonctionnelle (CC) dans les moyens de pulvérisation 25. Le raccord 57 assure une amenée tangentielle puis une circulation de l'air comprimé concentrique à celui des boues (B) dans le tube 53.

La composition chimique fonctionnelle (CC) pourrait éventuellement comprendre également dans certains cas un ajout d'ammoniac NH₃ ou équivalent et/ou d'eau H₂O.

Ou alternativement, il pourrait être pulvérisé de l'ammoniac ou équivalent au lieu et place de la composition chimique fonctionnelle (CC), celle-ci n'étant pas pulvérisée. Dans ce cas, l'introduction de la composition chimique fonctionnelle (CC) est discontinue.

Selon une autre réalisation possible, on introduit la composition chimique fonctionnelle (CC) dans l'effluent gazeux (EG) en continu.

Selon la réalisation représentée, sont associés aux moyens de pulvérisation 25 tels qu'ils ont été précédemment décrits, des moyens 58, 59 de stockage/amenée d'eau et d'ammoniac ou équivalent, respectivement.

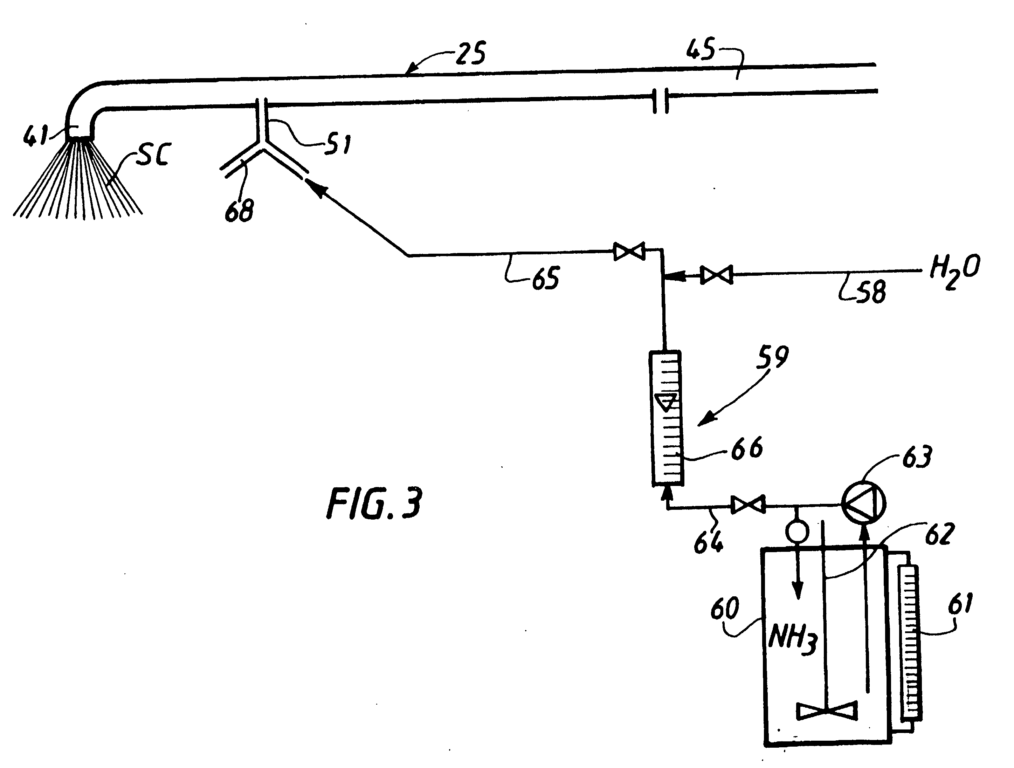

Les moyens 59 peuvent comporter, dans la réalisation représentée en figure 3, une cuve d'ammoniac 60 - par exemple à 22°B - avec son niveau 61, un agitateur 62, une pompe 63 en sortie, une canalisation 64, 65 sur laquelle est monté un débimètre 66 et qui est terminée par un piquage sur la canne 45. Ce piquage peut être celui formé par le raccord 51.

Il peut être prévu que les conduits d'amenée d'air des moyens 50 peuvent venir se brancher sur la canalisation 64.

Dans une telle réalisation, les moyens 58 d'amenée d'eau du réseau - tels que des conduits - viennent également se brancher sur la canalisation 64.

Le cas échéant, il est prévu également une conduite en dérivation entre la canalisation 64 et la canne 45 au voisinage des organes de pulvérisation 41.

Par ailleurs, la protection thermique des moyens de pulvérisation 25 au voisinage des organes de pulvérisation 41 peut être assurée par une amenée d'eau ou plus généralement un fluide de refroidissement, via une canalisation 68, au niveau du raccord 51.

Les vannes et clapets 56 permettent d'ajuster la composition de la composition chimique fonctionnelle (CC) pulvérisée par les moyens 25.

Avec la réalisation considérée où des boues (B) sont mélangées à de l'ammoniac ou équivalent, il est possible d'avoir une composition qui comporte, en poids, de l'ordre de 1 à 6 %, plus spécialement de l'ordre de 2 % d'ammoniac NH₃ ou équivalent considéré à 22°B.

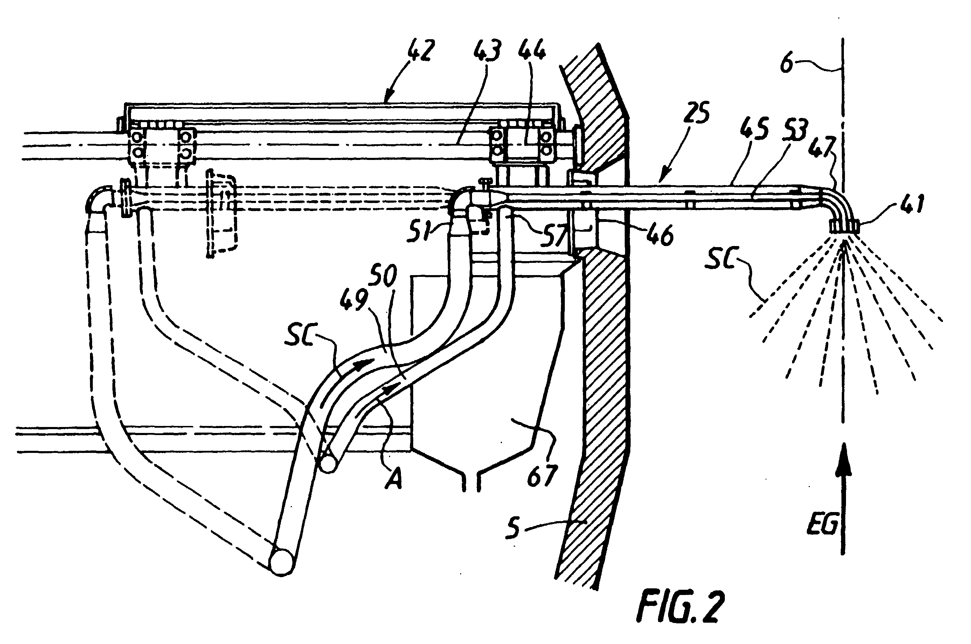

Dans la réalisation représentée sur la figure 2, il est prévu un bac 67 d'évacuation des eaux de rinçage des moyens 25 de pulvérisation situé à l'extérieur de la tour 5, contre elle, à proximité immédiate et en-dessous de la porte 46 et des moyens de pulvérisation 25, notamment des organes de pulvérisation 41 en position escamotée.

En fonctionnement, la pulvérisation de la composition chimique fonctionnelle (CC) est réalisée dans une zone où la température de l'effluent gazeux (EG) est comprise entre de l'ordre de 850°C et 1000°C et, plus particulièrement, dans une zone où le gradient de température de l'effluent gazeux (EG) est faible, par exemple inférieur à 50°C. A cet endroit, la température de l'effluent gazeux (EG) est de l'ordre de 850 à 950°C. Cela correspond sensiblement à la température de l'effluent gazeux (EG) en sortie du four 2.

La température de l'effluent gazeux en sortie de tour 5 est au minimum de 850°C.

Le four 2 peut avoir une capacité, s'agissant des ordures ménagères (OM), de plusieurs notamment quelques tonnes par heure.

D'excellents résultats ont été obtenus en pulvérisant des boues (B) constituant la composition chimique fonctionnelle (CC) avec une quantité correspondant à de l'ordre de 20 à 100 kg de matières sèches par tonne d'ordures ménagères (OM) à incinérer.

Par exemple, selon des essais, de 25 à 35 kg, notamment de l'ordre de 32 kg de matières sèches par tonne d'ordures ménagères (OM) à incinérer.

Le ratio molaire NH₃/NOₓ est dans les procédés de réduction sélective non-catalytique en général compris entre 1 et 5 environ. Selon une mise en oeuvre considérée de l'invention, il est de 1.

La vitesse moyenne d'écoulement de l'effluent gazeux (EG) dans la tour 5 est de l'ordre de 4 à 5 m/s.

Dans ces conditions, on peut, en utilisant pour la composition chimique (CC) les seules boues (B) précédemment considérées amener, en sortie de tour 5, la teneur de l'effluent gazeux (EG) en NOₓ jusqu'à une valeur de l'ordre de 50 mg NO₂ par Nm³ d'effluent (EG).

Cela revient à réduire la teneur de 80% environ, voire plus, par rapport à celle en sortie de four 2.

Le cas échéant, il est prévu, en aval de la tour 5, des moyens d'élimination de l'ammoniac résiduel par exemple par absorption par voie humide.

Sont également traités par ailleurs les oxydes de soufre et l'acide chlorhydrique.

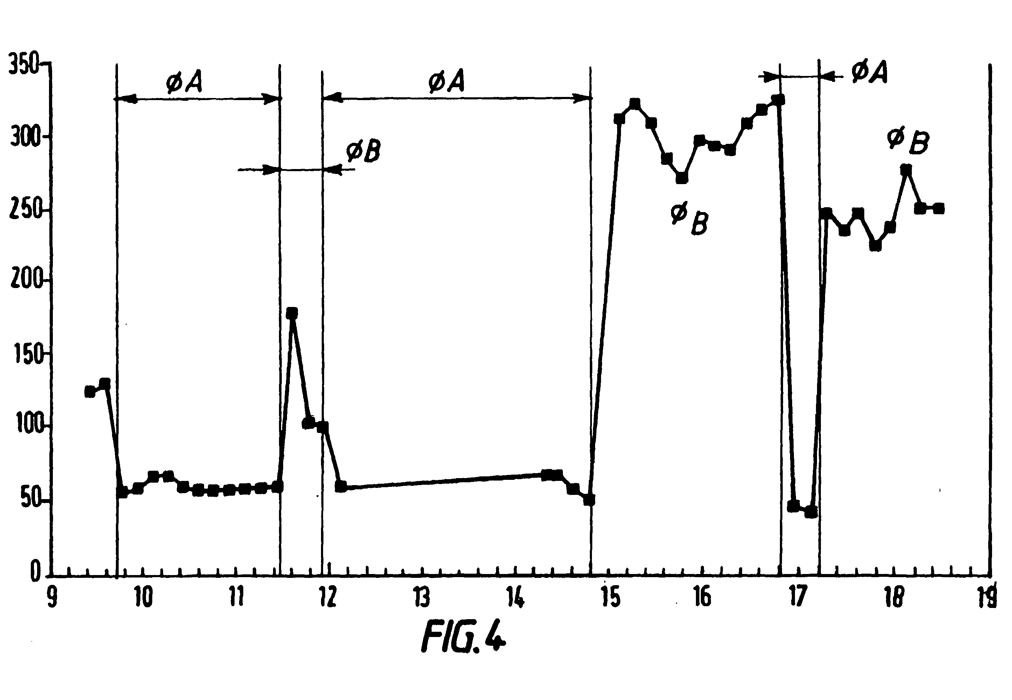

La figure 4 illustre bien l'efficacité du procédé. On constate que pendant les phases φA où on injecte les boues (B), la teneur en NOₓ de l'effluent gazeux en sortie de tour 5 est de l'ordre de 50 mg NO₂ par Nm³ d'effluent (EG). Dès que la pulvérisation de boues (B) cesse, la teneur augmente jusqu'à atteindre, par exemple, plus de 300 mg NO₂ par Nm³ d'effluent (EG). Inversement, dès que la pulvérisation de boues reprend, la teneur chute à la valeur précédemment indiquée.

## Revendications

1. Procédé de traitement d'un effluent gazeux (EG) comportant des NOₓ issu de l'incinération des ordures ménagères (OM) en vue de sa dénoxification par réduction sélective non catalytique, dans lequel on introduit dans l'effluent gazeux à température comprise entre de l'ordre de 850° C et 1 000°C une composition chimique fonctionnelle (CC) comprenant des boues (B) provenant du traitement des eaux usées urbaines ou des résidus de fabrication industrielle, ladite composition chimique se présentant sous forme pâteuse pour son introduction dans l'effluent gazeux, divisée en gouttes ou gouttelettes, de l'air ou un gaz vecteur de pulvérisation (A) étant introduit dans la composition (CC) à cet effet.

2. Procédé de traitement selon la revendication 1, **caractérisé en ce que** la composition (CC) comprend uniquement des boues (B) provenant du traitement des eaux usées urbaines ou des résidus de fabrication industrielle.

3. Procédé de traitement selon l'une des revendications 1 ou 2, **caractérisé en ce que** les boues (B) ont subi un pré-traitement de déshydratation en vue de les épaissir jusqu'à la consistance pâteuse voulue, les matières sèches étant concentrées.

4. Procédé se traitement selon l'une des revendications 1 ou 3, **caractérisé en ce que** la composition (CC) comprend également de l'eau ajoutée aux boues (B).

5. Procédé de traitement selon l'une des revendications 1, 3 ou 4, **caractérisé en ce que** la composition (CC) comprend également un composé comprenant une fonction N-H, tel qu'urée, amines primaires, amines secondaires ou de l'ammoniac.

6. Procédé de traitement selon la revendication 5, **caractérisé en ce que** la composition (CC) comporte, en poids, de l'ordre de 1 à 6 %, plus spécialement de l'ordre de 2 % d'ammoniac NH₃ ou équivalent considéré à 22°B.

7. Procédé de traitement selon la revendication 1, **caractérisé en ce que** les gouttes ou gouttelettes, ou une partie notable d'entre elles, ont un diamètre de l'ordre de 150 à 500 um.

8. Procédé de traitement selon l'une quelconque des revendications 1 à 7, **caractérisé en ce que** les boues (B) comprennent, en poids, de l'ordre de 70 à 90 %, plus spécialement de l'ordre de 80 % d'eau et de l'ordre de 10 à 30 %, plus spécialement de l'ordre de 20 %, de matières sèches.

9. Procédé de traitement selon l'une quelconque des revendications 1 à 8, **caractérisé en ce que** les matières sèches des boues (B) comprennent, en poids, de l'ordre de 50 à 60 % de matières organiques et de l'ordre de 40 à 50 % de matières minérales inertes.

10. Procédé selon l'une des revendications 1 à 9, **caractérisé en ce que** l'effluent gazeux (EG) suit un flux généralement ascendant et unidirectionnel et la composition chimique fonctionnelle (CC) y est introduite selon un flux généralement descendant, à contre-courant du flux de l'effluent gazeux (EG).

11. Procédé selon une des revendications 1 à 10, **caractérisé en ce que** la composition chimique fonctionnelle (CC) est pulvérisée pneumatiquement au moyen d'un gaz vecteur de pulvérisation tel que de l'air comprimé (A).

12. Procédé selon l'une quelconque des revendications 1 à 11, **caractérisé en ce qu'**on introduit dans l'effluent gazeux (EG) essentiellement la composition chimique fonctionnelle (CC), éventuellement au moyen d'air comprimé ou d'un gaz vecteur de pulvérisation (A), mais sans apport d'hydrogène extérieur.

13. Procédé selon l'une quelconque des revendications 1 à 12, **caractérisé en ce qu'**on introduit la composition chimique fonctionnelle dans une zone où le gradient de température de l'effluent gazeux (EG) est faible.

14. Procédé selon l'une quelconque des revendications 1 à 13, **caractérisé en ce qu'**on introduit de l'ordre de 20 à 100 kg de matières sèches de boues (B) par tonne d'ordures ménagères (OM) à incinérer.

15. Procédé selon la revendication 14, **caractérisé en e qu**'on introduit de l'ordre de 30 à 60 kg, notamment de l'ordre de 32 kg, de matières sèches de boues (B) par tonnes d'ordures ménagères (OM) à incinérer.

16. Procédé selon l'une quelconque des revendications 1 à 15, **caractérisé en ce qu'**on introduit la composition chimique fonctionnelle (CC) dans l'effluent gazeux (EG) en continu.

17. Procédé selon l'une quelconque des revendications 1 à 15, **caractérisé en ce qu'**on introduit la composition chimique fonctionnelle (CC) dans l'effluent gazeux (EG) de façon discontinue pendant certaines phases.

18. Procédé selon la revendication 17, **caractérisé en ce que** dans les phases durant lesquelles on n'introduit pas de composition chimique fonctionnelle (CC), on introduit de l'ammoniac ou équivalent.

19. Procédé selon l'une quelconque des revendications 1 à 18, **caractérisé en ce qu'**on pré-traite les boues avant injection, notamment par centrifugation, afin de les déshydrater et les épaissir jusqu'à la consistance pâteuse et la teneur en matières sèches voulues.

20. Procédé selon l'une quelconque des revendications 1 à 19, aractérisé en ce qu'on mesure la teneur de l'effluent gazeux (EG) en NOₓ en aval de l'introduction de la composition chimique fonctionnelle (CC) une fois que celle-ci a été opérante et on ajuste en conséquence la teneur des différents corps ou agents de la composition chimique fonctionnelle (CC).

21. Procédé selon l'une quelconque des revendications 1 à 20, **caractérisé en ce qu'**on amène la teneur de l'effluent gazeux (EG) en NOₓ jusqu'à une valeur de l'ordre de 50mg NO₂ par Nm³ sec d'effluent.

22. Procédé d'incinération des ordures ménagères dans lequel on amène les ordures ménagères (OM) à incinérer dans un four (2) où elle sont incinérées et dans lequel on collecte l'effluent gazeux (EG) issu de l'incinération des ordures ménagère (OM) dans une tour (5) en sortie de four (2), **caractérisé en ce qu'**on procède à un traitement de l'effluent gazeux (EG) par le procédé selon l'une quelconque des revendications 1 à 21.

23. Procédé d'incinération selon la revendication 22, **caractérisé en ce qu'**on met en oeuvre le procédé de traitement jusqu'à réduire la teneur en NOₓ de l'effluent gazeux (EG) de l'ordre de 80 % en sortie de tour (5), par rapport à la teneur juste après l'incinération.

24. Installation de traitement d'un effluent gazeux, provenant en particulier d'une installation d'incinération des ordures ménagères ou autres déchets, pour la mise en oeuvre du procédé selon l'une quelconque des revendications 22 et 23, du type comprenant :
- une amenée (1) d'ordures ménagères (OM),
- un four (2) d'incinération des ordures ménagères (OM),
- une évacuation (3) de scories (SC),
- et des moyens (4) de collecte et de traitement de l'effluent gazeux (EG), comprenant une tour (5) en sortie de four (2) dans laquelle se trouvent, au moins lors du fonctionnement de l'installation, des moyens (25) d'introduction d'une composition chimique fonctionnelle (CC) selon l'une quelconque des revendications 1 à 19.

25. Installation de traitement d'un effluent gazeux, provenant en particulier d'une installation d'incinération des ordures ménagères ou autres déchets selon la revendication 24, **caractérisée en ce qu'**en sortie de four (2) et d'amont en aval sont agencés en premier lieu une chaudière (8), un électrofiltre (9), un échangeur condenseur (10) et une cheminée (12) ; en deuxième lieu des moyens de réfrigération (18) ; et en troisième lieu des moyens (15) d'évacuation des scories et des fines.

26. Installation de traitement d'un effluent gazeux, provenant en particulier d'une installation d'incinération des ordures ménagères ou autres déchets selon l'une quelconque des revendications 24 et 25, **caractérisée en ce que** les moyens (25) d'introduction d'une composition chimique fonctionnelle (CC) sont des moyens de pulvérisation.

27. Installation de traitement d'un effluent gazeux, provenant en particulier d'une installation d'incinération des ordures ménagères ou autres déchets selon l'une quelconque des revendications 24 à 26, **caractérisée en ce que** les moyens (25) d'introduction/pulvérisation, à savoir les organes de pulvérisation (41), sont dirigés vers le bas, là où se trouve le four (2).

28. Installation de traitement d'un effluent gazeux, provenant en particulier d'une installation d'incinération des ordures ménagères ou autres déchets selon l'une quelconque des revendications 24 à 27, **caractérisée en ce que** les moyens (25) d'introduction/pulvérisation, à savoir les organes de pulvérisation (41), sont écartés du four (2), à savoir de sa sole (27).

29. Installation de traitement d'un effluent gazeux, provenant en particulier d'une installation d'incinération des ordures ménagères ou autres déchets selon l'une quelconque des revendications 24 à 28, **caractérisée en ce que** les moyens (25) d'introduction/pulvérisation sont agencés d'une part selon une zone ponctuelle ou linéaire ou surfacique, d'autre part selon un ou plusieurs étages de la tour (5).

30. Installation de traitement d'un effluent gazeux, provenant en particulier d'une installation d'incinération des ordures ménagères ou autres déchets selon l'une des revendications 24 à 29, **caractérisée en ce que** les moyens d'introduction/pulvérisation sont agencés de manière à être escamotables d'une position normale d'utilisation où ils sont placés, au moins en ce qui concerne les organes de pulvérisation (41) dans la tour (5), à une position escamotée notamment d'entretien ou lorsque l'installation est à l'arrêt, à l'extérieur de la tour (5).

31. Installation de traitement d'un effluent gazeux, provenant en particulier d'une installation d'incinération des ordures ménagères ou autres déchets selon l'une quelconque des revendications 24 à 30, **caractérisée en ce que** les moyens de pulvérisation (25), à savoir les organes de pulvérisation (41), sont agencés de manière coulissante sensiblement radialement par rapport à l'axe (6) de la tour (5).

32. Installation de traitement d'un effluent gazeux, provenant en particulier d'une installation d'incinération des ordures ménagères ou autres déchets selon l'une quelconque des revendications 24 à 31, **caractérisée en ce que** les moyens (25) d'introduction/pulvérisation comprennent au moins une canne (45), terminée d'un côté par une partie extrême recourbée (47) pourvue d'organes de pulvérisation (41) et comportant du côté opposé des raccords (51, 57) pour des conduits des moyens d'amenée (49, 50) des corps ou agents de la composition chimique fonctionnelle et de l'air, ou plus généralement du gaz vecteur de pulvérisation.

33. Installation de traitement d'un effluent gazeux, provenant en particulier d'une installation d'incinération des ordures ménagères ou autres déchets selon l'une quelconque des revendications 24 à 32, **caractérisée en ce que** les organes de pulvérisation (41) assurent une pulvérisation sous forme d'un cône ouvert assurant une répartition spatiale convenablement homogène de la composition chimique fonctionnelle (CC) dans la zone de la tour (5) où elle est introduite dans l'effluent gazeux (EG).

34. Installation de traitement d'un effluent gazeux, provenant en particulier d'une installation d'incinération des ordures ménagères ou autres déchets selon l'une quelconque des revendications 30 à 33, **caractérisée en ce qu'**elle comporte des moyens de déplacement (42), notamment de coulissement, des moyens de pulvérisation (25) entre leur position d'utilisation et leur position escamotée.

35. Installation de traitement d'un effluent gazeux, provenant en particulier d'une installation d'incinération des ordures ménagères ou autres déchets selon la revendication 34, **caractérisée en ce que** les moyens de déplacement (42) sont asservis à la marche et à l'arrêt de l'installation.

36. Installation de traitement d'un effluent gazeux, provenant en particulier d'une installation d'incinération des ordures ménagères ou autres déchets selon la revendication 32, **caractérisée en ce qu'**elle comporte une canne coudée (45).

37. Installation de traitement d'un effluent gazeux, provenant en particulier d'une installation d'incinération des ordures ménagères ou autres déchets selon l'une quelconque des revendications 24 à 36, **caractérisée en ce qu'**aux moyens de pulvérisation (25) sont associés des moyens de protection thermique et des moyens de protection du colmatage.

38. Installation de traitement d'un effluent gazeux, provenant en particulier d'une installation d'incinération des ordures ménagères ou autres déchets selon la revendication 32, **caractérisée en ce que** les conduits des moyens d'amenée (49, 50) sont déformables ou articulés en tout ou partie.

39. Installation de traitement d'un effluent gazeux, provenant en particulier d'une installation d'incinération des ordures ménagères ou autres déchets selon l'une quelconque des revendications 24 à 38, **caractérisée en ce qu'**aux moyens d'introduction/pulvérisation (25) sont associés des moyens de stockage et d'amenée (48, 49) de boues (B) provenant du traitement des eaux usées urbaines ou des résidus de fabrication industrielle et des moyens d'amenée (50) d'un gaz vecteur de pulvérisation tel que l'air comprimé (A).

40. Installation de traitement d'un effluent gazeux, provenant en particulier d'une installation d'incinération des ordures ménagères ou autre déchets selon l'une quelconque des revendications 24 à 39, **caractérisée en ce qu'**elle comporte des moyens (54) de pré-traitement des boues (B) afin de les déshydrater jusqu'à la consistance pâteuse et voulue afin d'obtenir la teneur en matières sèches et voulues, tels qu'une centrifugeuse.

41. Installation de traitement d'un effluent gazeux, provenant en particulier d'une installation d'incinération des ordures ménagères ou autres, déchets selon l'une quelconque des revendications 24 à 40, **caractérisée en ce qu'**aux moyens d'introduction/pulvérisation (25) sont associés des moyens de stockage/amenée d'eau et/ou d'ammoniac ou équivalent (58, 59).

42. Installation de traitement d'un effluent gazeux, provenant en particulier d'une installation d'incinération des ordures ménagères ou autres déchets selon l'une quelconque des revendications 24 à 41, **caractérisée en ce qu'**aux moyens (48, 49, 50, 58, 59) de stockage/d'amenée de boues, d'air comprimé ou équivalent, d'eau, d'ammoniac ou équivalent sont associés des vannes et clapets (56) d'arrêt ou de réglage des débits respectifs de manière à permettre d'ajuster la composition de la composition chimique fonctionnelle (CC).

43. Installation de traitement d'un effluent gazeux, provenant en particulier d'une installation d'incinération des ordures ménagères ou autres déchets selon la revendication 42, **caractérisée en ce qu'**elle comporte des moyens (55) aptes à mesurer la teneur de l'effluent gazeux (EG) en NOₓ en aval des moyens de pulvérisation (25), couplés aux vannes et clapets (56) d'arrêt ou de réglage des débits en vue d'ajuster la composition de la composition chimique fonctionnelle (CC).

44. Installation de traitement d'un effluent gazeux, provenant en particulier d'une installation d'incinération des ordures ménagères ou autres déchets selon l'une quelconque des revendications 24 à 43, **caractérisée en ce** quelle comporte également un bac d'évacuation (67) des eaux de rinçage des moyens d'introduction/pulvérisation (25) situé à l'extérieur de la tour (5), contre elle, à proximité immédiate et en-dessous des moyens d'introduction/ pulvérisation (25), notamment des organes de pulvérisation (41) en position escamotée.

45. Installation de traitement d'un effluent gazeux, provenant en particulier d'une installation d'incinération des ordures ménagères ou autres déchets selon l'une quelconque des revendications 24 à 44, **caractérisée en ce qu'**elle est couplée et combinée à une installation de traitement des eaux usées urbaines ou des résidus de fabrication industrielle, cette dernière installation comprend des moyens de prélèvement des boues associées aux moyens (48, 49) de stockage et d'amenée des boues, respectivement aux moyens (54) de pré-traitement par déshydratation, de l'installation d'incinération.

## Patentansprüche

1. Aufbereitungsverfahren eines gashaltigen Abgangs (EG) mit aus der Verbrennung von Haushaltsabfällen (OM) stammenden NOₓ zwecks seiner Denoxifikation durch selektive, nicht katalytische Reduktion, in dem in den gashaltigen Abgang bei einer zwischen der Größenordnung von 850°C und 1.000 °C inbegriffenen Temperatur eine chemische funktionale Verbindung (CC) mit aus der Aufbereitung der städtischen Abwässer oder Rückstände aus industrieller Fertigung stammenden Schlämmen (B) eingeführt wird, wobei die genannte chemische Verbindung für ihr in Tropfen oder Tröpfchen aufgeteiltes Einführen in den gashaltigen Abgang eine breiartige Form aufweist, wobei zu diesem Zweck Luft oder ein versprühtes Schleppgas (A) in die Verbindung (CC) eingeführt wird.

2. Aufbereitungsverfahren gemäß Anspruch 1, **dadurch gekennzeichnet, dass** die chemische Verbindung (CC) ausschließlich aus städtischen Abwässern oder Rückständen industrieller Fertigung stammende Schlämme (B) umfasst.

3. Aufbereitungsverfahren gemäß Anspruch 1 oder 2, **dadurch gekennzeichnet, dass** die Schlämme (B) einer Vorbehandlung zur Entwässerung unterzogen wurden, um sie bis zur gewünschten breiartigen Konsistenz einzudicken, wobei die Trockenmasse konzentriert wird.

4. Aufbereitungsverfahren gemäß Anspruch 1 oder 3, **dadurch gekennzeichnet, dass** die Verbindung (CC) ebenfalls den Schlämmen (B) hinzugesetztes Wasser umfasst.

5. Aufbereitungsverfahren gemäß Anspruch 1, 3 oder 4, **dadurch gekennzeichnet, dass** die Verbindung (CC) ebenfalls eine Zusammensetzung mit einer Funktion N-H umfasst, wie z. B. Harnstoff, primäre Amine, sekundäre Amine oder Ammoniak.

6. Aufbereitungsverfahren gemäß Anspruch 5, **dadurch gekennzeichnet, dass** die Verbindung (CC) Ammoniak NH₃ oder ein bei 22° B berücksichtigtes Äquivalent in der Größenordnung von 1 bis 6 % an Gewicht, ganz besonders in der Größenordnung von 2% umfasst.

7. Aufbereitungsverfahren gemäß Anspruch 1, **dadurch gekennzeichnet, dass** die Tropfen oder Tröpfchen oder ein beträchtlicher Teil von ihnen einen Durchmesser in der Größenordnung von 150 bis 500 µm haben.

8. Aufbereitungsverfahren gemäß Anspruch 1 bis 7, **dadurch gekennzeichnet, dass** die Schlämme (B) Wasser in der Größenordnung von 70 bis 90 % an Gewicht, ganz besonders in der Größenordnung von 80 %, und Trockenmasse in der Größenordnung von 10 bis 30 %, ganz besonders in der Größenordnung von 20 % an Gewicht umfassen.

9. Aufbereitungsverfahren gemäß Anspruch 1 bis 8, **dadurch gekennzeichnet, dass** die Trockenmasse der Schlämme (B) organisches Material in der Größenordnung von 50 bis 60 % an Gewicht und träges mineralisches Material in der Größenordnung von 40 bis 50 % an Gewicht umfassen.

10. Verfahren gemäß Anspruch 1 bis 9, **dadurch gekennzeichnet, dass** der gashaltige Abgang (EG) einem allgemein in einer Richtung aufsteigenden Fluss folgt und die funktionale chemische Verbindung (CC) dort gemäß einem allgemein absteigenden Fluss gegen den Fluss des gashaltigen Abgangs (EG) eingeführt wird.

11. Verfahren gemäß Anspruch 1 bis 10, **dadurch gekennzeichnet, dass** die funktionale chemische Verbindung (CC) pneumatisch mittels eines versprühten Schleppgases, wie zum Beispiel Druckluft (A) versprüht wird.

12. Verfahren gemäß Anspruch 1 bis 11, **dadurch gekennzeichnet, dass** man in den gashaltigen Abgang (EG) im Wesentlichen die funktionale chemische Verbindung (CC), eventuell mittels Druckluft oder eines versprühten Schleppgases (A), jedoch ohne Zuführung von externem Wasserstoff einführt.

13. Verfahren gemäß Anspruch 1 bis 12, **dadurch gekennzeichnet, dass** man die funktionale chemische Verbindung in einen Bereich einführt, in dem der Temperaturverlauf des gashaltigen Abgangs (EG) niedrig ist.

14. Verfahren gemäß Anspruch 1 bis 13, **dadurch gekennzeichnet**, das man Schlammtrockenmasse (B) in der Größenordnung von 20 bis 100 kg pro Tonne zu verbrennenden Haushaltsabfällen (OM) einführt.

15. Verfahren gemäß Anspruch 14, **dadurch gekennzeichnet, dass** man Schlammtrockenmasse (B) in der Größenordnung von 30 bis 60 kg, insbesondere in der Größenordnung von 32 kg pro Tonne zu verbrennenden Haushaltsabfällen (OM) einführt.

16. Verfahren gemäß Anspruch 1 bis 15, **dadurch gekennzeichnet, dass** man die funktionale chemische Verbindung (CC) in den gashaltigen Abgang (EG) kontinuierlich einführt.

17. Verfahren gemäß Anspruch 1 bis 15, **dadurch gekennzeichnet, dass** man die funktionale chemische Verbindung (CC) in den gashaltigen Abgang (EG) während mehrerer Phasen diskontinuierlich einführt.

18. Verfahren gemäß Anspruch 17, **dadurch gekennzeichnet, dass** man in den Phasen, in denen der man keine funktionale chemische Verbindung (CC) einführt, Ammoniak oder ein Äquivalent einführt.

19. Verfahren gemäß Anspruch 1 bis 18, **dadurch gekennzeichnet, dass** man die Schlämme vor der Injektion insbesondere durch Zentrifugieren vorbehandelt, um sie bis zur gewünschten breiartigen Konsistenz und dem gewünschten Gehalt an Trockenmasse zu entwässern und einzudicken.

20. Verfahren gemäß Anspruch 1 bis 19, **dadurch gekennzeichnet, dass** man den Gehalt des gashaltigen Abgangs (EG) an NOₓ oberhalb der Einführung der funktionalen chemischen Verbindung (CC) misst, sobald letztere gewirkt hat, und man dementsprechend den Gehalt der unterschiedlichen Körper oder Mittel der funktionalen chemischen Verbindung (CC) anpasst.

21. Verfahren gemäß Anspruch 1 bis 20, **dadurch gekennzeichnet, dass** man den Gehalt des gashaltigen Abgangs (EG) an NOx bis zu einem Wert in der Größenordnung von 50 mg NO₂ pro trockenem Nm³-Abgang bringt.

22. Verbrennungsverfahren von Haushaltsabfällen, in dem man die zu verbrennenden Haushaltsabfälle (OM) in einen Ofen (2) bringt, in dem sie verbrannt werden und in dem man den aus der Verbrennung der Haushaltsabfälle (OM) stammenden gashaltigen Abgang (EG) in einem Turm (5) am Ofenausgang (2) auffängt, **dadurch gekennzeichnet, dass** man den gashaltigen Abgang (EG) durch das Verfahren gemäß Anspruch 1 bis 21 aufbereitet.

23. Verbrennungsverfahren gemäß Anspruch 22, **dadurch gekennzeichnet, dass** man das Aufbereitungsverfahren bis zur Reduktion des NOₓ-Gehaltes des gashaltigen Abgangs (EG) in der Größenordnung von 80 % am Turmausgang (5) im Verhältnis zum Gehalt direkt nach der Verbrennung umsetzt.

24. Aufbereitungsanlage eines insbesondere aus einer Verbrennungsanlage für Haushalts- oder andere Abfälle stammenden gashaltigen Abgangs für die Umsetzung des Verfahrens gemäß Anspruch 22 und 23 von der Art, umfassend:
- eine Zufuhr (1) von Haushaltsabfällen (OM),
- einen Verbrennungsofen (2) der Haushaltsabfälle (OM),
- einen Austrag (3) von Schlacken (SC),
- und Auffangmittel (4) und Aufbereitungsmittel des gashaltigen Abgangs (EG) mit einem Turm (5) am Ofenausgang (2), in dem sich wenigstens während des Betriebs der Anlage Einführmittel (25) einer funktionalen chemischen Zusammensetzung (CC) gemäß Anspruch 1 bis 19 befinden.

25. Aufbereitungsanlage eines insbesondere aus einer Verbrennungsanlage für Haushaltsabfälle oder anderen Abfällen gemäß Anspruch 24 stammenden gashaltigen Abgangs, **dadurch gekennzeichnet, dass** am Ofenausgang (2) und oberhalb unterhalb an erster Stelle ein Heizkessel (8), ein Elektrofilter (9), ein Kondensataustauscher (10) und ein Rauchfang (12) angeordnet sind; an zweiter Stelle Kühlmittel (18); und an dritter Stelle Austragsmittel (15) der Schlämme und feinen Partikel.

26. Aufbereitungsanlage eines insbesondere aus einer Verbrennungsanlage für Haushaltsabfälle oder andere Abfälle gemäß Anspruch 24 und 25 stammenden gashaltigen Abgangs, **dadurch gekennzeichnet, dass** die Einführmittel (25) einer funktionalen chemischen Verbindung (CC) Sprühmittel sind.

27. Aufbereitungsanlage eines insbesondere aus einer Verbrennungsanlage für Haushaltsabfälle oder andere Abfälle gemäß Anspruch 24 bis 26 stammenden gashaltigen Abgangs, **dadurch gekennzeichnet, dass** die Einführ- / Sprühmittel (25), nämlich die Sprühorgane (41), nach unten gerichtet sind, dort, wo sich der Ofen (2) befindet.

28. Aufbereitungsanlage eines insbesondere aus einer Verbrennungsanlage für Haushaltsabfälle oder andere Abfälle gemäß Anspruch 24 bis 27 stammenden gashaltigen Abgangs, **dadurch gekennzeichnet, dass** die Einführ- / Sprühmittel (25), nämlich die Sprühorgane (41), vom Ofen (2), nämlich von seiner Sohle (27), beabstandet sind.

29. Aufbereitungsanlage eines insbesondere aus einer Verbrennungsanlage für Haushaltsabfälle oder andere Abfälle gemäß Anspruch 24 bis 28 stammenden gashaltigen Abgangs, **dadurch gekennzeichnet, dass** die Einführ- / Sprühmittel (25) einerseits gemäß einem punktuellen oder linearen oder flächenartigen Bereich angeordnet sind, andererseits gemäß einer oder mehreren Etagen des Turms (5).

30. Aufbereitungsanlage eines insbesondere aus einer Verbrennungsanlage für Haushaltsabfälle oder andere Abfälle gemäß Anspruch 24 bis 29 stammenden gashaltigen Abgangs, **dadurch gekennzeichnet, dass** die Einführ- / Sprühmittel derart angeordnet sind, dass sie aus einer normalen Gebrauchsposition, in der sie wenigstens hinsichtlich der Sprühorgane (41) im Turm (5) platziert sind, in eine versenkte, insbesondere Instandhaltungs-Position oder eine Stillstandsposition außerhalb des Turms (5) versenkbar sind.

31. Aufbereitungsanlage eines insbesondere aus einer Verbrennungsanlage für Haushaltsabfälle oder andere Abfälle gemäß Anspruch 24 bis 30 stammenden gashaltigen Abgangs, **dadurch gekennzeichnet, dass** die Einführ- / Sprühmittel (25), nämlich die Sprühorgane (41), im Verhältnis zur Achse (6) des Turms (5) gleitend, deutlich radial angeordnet sind.

32. Aufbereitungsanlage eines insbesondere aus einer Verbrennungsanlage für Haushaltsabfälle oder andere Abfälle gemäß Anspruch 24 bis 31 stammenden gashaltigen Abgangs, **dadurch gekennzeichnet, dass** die Einführ- / Sprühmittel wenigstens ein auf einer Seite durch einen nach hinten gekrümmten, mit Sprühorganen (41) versehenen und auf der gegenüber liegenden Seite Anschlüsse (51, 57) für Leitungen der Zuführmittel (49, 50) der Körper oder Mittel der funktionalen chemischen Verbindung und der Luft oder ganz allgemein des versprühten Schleppgases umfassenden Endteil (47) endendes Rohr (45) umfassen.

33. Aufbereitungsanlage eines insbesondere aus einer Verbrennungsanlage für Haushaltsabfälle oder andere Abfälle gemäß Anspruch 24 bis 32 stammenden gashaltigen Abgangs, **dadurch gekennzeichnet, dass** die Sprühorgane (41) ein Sprühen in Form eines eine ausreichend homogene räumliche Verteilung der funktionalen chemischen Verbindung (CC) im Bereich des Turms (5), in dem sie in den gashaltigen Abgang (EG) eingeführt wird, gewährleistenden offenen Kegels gewährleisten.

34. Aufbereitungsanlage eines insbesondere aus einer Verbrennungsanlage für Haushaltsabfälle oder andere Abfälle gemäß Anspruch 30 bis 33 stammenden gashaltigen Abgangs, **dadurch gekennzeichnet, dass** sie Verschiebungsmittel (42) insbesondere zum Gleiten der Sprühmittel (25) zwischen ihrer Gebrauchsposition und ihrer versenkten Position umfasst.

35. Aufbereitungsanlage eines insbesondere aus einer Verbrennungsanlage für Haushaltsabfälle oder andere Abfälle gemäß Anspruch 34 stammenden gashaltigen Abgangs, **dadurch gekennzeichnet, dass** die Verschiebungsmittel (42) vom Betrieb und vom Stillstand der Anlage abhängig sind.

36. Aufbereitungsanlage eines insbesondere aus einer Verbrennungsanlage für Haushaltsabfälle oder andere Abfälle gemäß Anspruch 32 stammenden gashaltigen Abgangs, **dadurch gekennzeichnet, dass** sie ein abgebogenes Rohr (45) umfasst.

37. Aufbereitungsanlage eines insbesondere aus einer Verbrennungsanlage für Haushaltsabfälle oder andere Abfälle gemäß Anspruch 24 bis 36 stammenden gashaltigen Abgangs, **dadurch gekennzeichnet, dass** den Sprühmitteln (25) thermische Schutzmittel und Schutzmittel vor Verstopfung zugeordnet sind.

38. Aufbereitungsanlage eines insbesondere aus einer Verbrennungsanlage für Haushaltsabfälle oder andere Abfälle gemäß Anspruch 32 stammenden gashaltigen Abgangs, **dadurch gekennzeichnet, dass** die Leitungen der Zuführmittel (49, 50) ganz oder teilweise verformbar oder artikuliert sind.

39. Aufbereitungsanlage eines insbesondere aus einer Verbrennungsanlage für Haushaltsabfälle oder andere Abfälle gemäß Anspruch 24 bis 38 stammenden gashaltigen Abgangs, **dadurch gekennzeichnet, dass** den Einführ- / Sprühmitteln (25) Lager- und Zuführmittel (48, 49) für aus der Aufbereitung städtischer Abwässer oder Rückständen industrieller Fertigung stammende Schlämmen (B) und Zuführmittel (50) eines versprühten Schleppgases, wie zum Beispiel Druckluft (A) zugeordnet sind.

40. Aufbereitungsanlage eines insbesondere aus einer Verbrennungsanlage für Haushaltsabfälle oder andere Abfälle gemäß Anspruch 24 bis 39 stammenden gashaltigen Abgangs, **dadurch gekennzeichnet, dass** sie Mittel (54), wie zum Beispiel eine Zentrifuge, zur Vor-Aufbereitung von Schlämmen (B) umfasst, um sie bis zur breiartigen und gewünschten Konsistenz zu entwässern, um den Gehalt an gewünschtem Trockenmaterial zu erhalten.

41. Aufbereitungsanlage eines insbesondere aus einer Verbrennungsanlage für Haushaltsabfälle oder andere Abfälle stammenden gashaltigen Abgangs gemäß Anspruch 24 bis 40, **dadurch gekennzeichnet, dass** den Einführ- / Sprühmitteln (25) Lager- / Zuführmittel (58, 59) für Wasser und / oder Ammoniak oder einem Äquivalent zugeordnet sind.

42. Aufbereitungsanlage eines insbesondere aus einer Verbrennungsanlage für Haushaltsabfälle oder andere Abfälle stammenden gashaltigen Abgangs gemäß Anspruch 24 bis 41, **dadurch gekennzeichnet, dass** den Lager- / Zuführmitteln (48, 49, 50, 58, 59) für Schlämme, Druckluft oder einem Äquivalent, Wasser, Ammoniak oder einem Äquivalent, Absperrschieber, Stellventile, Absperrklappen oder Stellklappen (56) für die jeweiligen Durchsätze derart zugeordnet sind, dass die Anpassung der Zusammensetzung der funktionalen chemischen Verbindung (CC) ermöglicht wird.

43. Aufbereitungsanlage eines insbesondere aus einer Verbrennungsanlage für Haushaltsabfälle oder andere Abfälle stammenden gashaltigen Abgangs gemäß Anspruch 42, **dadurch gekennzeichnet, dass** sie Mittel (55) umfasst, die zum Messen des NOₓ-Gehaltes des gashaltigen Abgangs (EG) unterhalb der mit den Absperrschiebern, Stellventilen, Absperrklappen und Stellklappen (56) des Durchsatzes zur Anpassung der Zusammensetzung der funktionalen chemischen Verbindung (CC) gekoppelten Sprühmittel (25) geeignet sind.

44. Aufbereitungsanlage eines insbesondere aus einer Verbrennungsanlage für Haushaltsabfälle oder andere Abfälle stammenden gashaltigen Abgangs gemäß Anspruch 24 bis 43, **dadurch gekennzeichnet, dass** sie ebenfalls einen Austragskasten (67) der Spülwasser der Einführungs- /Sprühmittel (25) umfasst, der sich außerhalb des Turms (5) gegen ihn in der unmittelbaren Nähe und unterhalb der Einführ- / Sprühmittel (25), insbesondere der Sprühorgane (41) in versenkter Position befindet.

45. Aufbereitungsanlage eines insbesondere aus einer Verbrennungsanlage für Haushaltsabfälle oder andere Abfälle stammenden gashaltigen Abgangs gemäß Anspruch 24 bis 44, **dadurch gekennzeichnet, dass** sie mit einer Aufbereitungsanlage städtischer Abwässer oder Rückstände industrieller Fertigung gekoppelt und kombiniert ist, wobei diese Anlage Entnahmemittel der den Lager- und Zuführmitteln (48, 49) zugeordneten Schlämme, jeweils den Mitteln (54) der Verbrennungsanlage zur Vor-Aufbereitung durch Entwässerung umfast.

## Claims

1. A method of treating a gaseous effluent (EG) comprising NOx resulting from the incineration of household refuse (OM) with a view to reducing its nitrogen oxide content by non-catalytic selective reduction, in which there is introduced into the gaseous effluent, at a temperature between approximately 850°C and 1000°C, a functional chemical composition (CC) comprising sludge (B) coming from the treatment of domestic waste water or industrial manufacturing waste, said chemical composition being in paste form for its introduction into the gaseous effluent, divided into drops or droplets, air or a spraying carrier gas (A) being introduced into the composition (CC) for that purpose.

2. A treatment method according to Claim 1, **characterised in that** the composition (CC) comprises only sludge (B) coming from the treatment of domestic waste water or industrial manufacturing waste.

3. A treatment method according to either of Claims 1 or 2, **characterised in that** the sludge (B) has undergone a dehydration pre-treatment with a view to thickening it to the required pasty consistency, the dry matter being concentrated.

4. A treatment method according to either of Claims 1 or 3, **characterised in that** the composition (CC) also comprises water added to the sludge (B).

5. A treatment method according to one of Claims 1, 3 or 4, **characterised in that** the composition (CC) also comprises a compound comprising an N-H function, such as urea, primary amines, secondary amines or ammonia.

6. A treatment method according to Claim 5, **characterised in that** the composition (CC) comprises, by weight, approximately 1% to 6%, more especially approximately 2%, ammonia NH₃ or equivalent considered at 22°B.

7. A treatment method according to Claim 1, **characterised in that** the drops or droplets, or a good many of them, have a diameter of approximately 150 to 500 µm.

8. A treatment method according to any one of Claims 1 to 7, **characterised in that** the sludge (B) comprises, by weight, approximately 70% to 90%, more especially approximately 80%, water and approximately 10% to 30%, more especially approximately 20%, dry matter.

9. A treatment method according to any one of Claims 1 to 8, **characterised in that** the dry matter of the sludge (B) comprises, by weight, approximately 50% to 60% organic matter and approximately 40% to 50% inert mineral matter.

10. A method according to one of Claims 1 to 9, **characterised in that** the gaseous effluent (EG) follows a generally upward and unidirectional flow and the functional chemical composition (CC) is introduced therein as a generally downward flow, against the current of the flow of the gaseous effluent (EG).

11. A method according to one of Claims 1 to 10, **characterised in that** the functional chemical composition (CC) is sprayed pneumatically by means of a spraying carrier gas such as compressed air (A).

12. A method according to any one of Claims 1 to 11, **characterised in that** there is introduced into the gaseous effluent (EG) essentially the functional chemical composition (CC), possibly by means of compressed air or a spraying carrier gas (A), but with no external hydrogen supply.

13. A method according to any one of Claims 1 to 12, **characterised in that** the functional chemical composition is introduced into a zone where the temperature gradient of the gaseous effluent (EG) is small.

14. A method according to any one of Claims 1 to 13, **characterised in that** approximately 20 kg to 100 kg of dry matter of sludge (B) per tonne of household refuse (OM) to be incinerated is introduced.

15. A method according to Claim 14, **characterised in that** approximately 30 kg to 60 kg, in particular approximately 32 kg, of dry matter of sludge (B) per tonne of household refuse (OM) to be incinerated is introduced.

16. A method according to any one of Claims 1 to 15, **characterised in that** the functional chemical composition (CC) is introduced into the gaseous effluent (EG) continuously.

17. A method according to any one of Claims 1 to 15, **characterised in that** the functional chemical composition (CC) is introduced into the gaseous effluent (EG) discontinuously during certain phases.

18. A method according to Claim 17, **characterised in that**, in the phases during which no functional chemical composition (CC) is introduced, ammonia or equivalent is introduced.

19. A method according to any one of Claims 1 to 18, **characterised in that** the sludge is pre-treated before injection, in particular by centrifuging, in order to dehydrate it and thicken it to the required pasty consistency and dry matter content.

20. A method according to any one of Claims 1 to 19, **characterised in that** the NOx content of the gaseous effluent (EG) is measured downstream of the introduction of the functional chemical composition (CC) once said composition has been effective and the content of the various substances or agents of the functional chemical composition (CC) is adjusted in consequence.

21. A method according to any one of Claims 1 to 20, **characterised in that** the NOx content of the gaseous effluent (EG) is brought to a value of approximately 50 mg NO₂ per dry Nm³ of effluent.

22. A method of incinerating household refuse in which the household refuse (OM) to be incinerated is conveyed into a furnace (2) where it is incinerated and in which the gaseous effluent (EG) resulting from the incineration of the household refuse (OM) is collected in a tower (5) at the output of the furnace (2), **characterised in that** a treatment of the gaseous effluent (EG) is carried out by the method according to any one of Claims 1 to 21.

23. An incineration method according to Claim 22, **characterised in that** the treatment method is implemented until the NOx content of the gaseous effluent (EG) is reduced by approximately 80% at the output of the tower (5), compared with the content just after incineration.

24. An installation for treating a gaseous effluent coming in particular from an installation for incinerating household refuse or other waste, for implementation of the method according to either one of Claims 22 and 23 of the type comprising:
- a supply (1) of household refuse (OM);
- a furnace (2) for incinerating household refuse (OM);
- a discharge (3) of slag (SC);
- and means (4) for collecting and treating the gaseous effluent (EG), comprising a tower (5) at the output of the furnace (2) in which there are situated, at least during the operation of the installation, means (25) for introducing a functional chemical composition (CC) according to any one of Claims 1 to 19.

25. An installation for treating a gaseous effluent coming in particular from an installation for incinerating household refuse or other waste according to Claim 24, **characterised in that**, at the output of the furnace (2) and from upstream to downstream there are arranged firstly, a boiler (8), an electrostatic filter (9), an exchanger/condenser (10) and a chimney (12); secondly, cooling means (18); and thirdly, means (15) for discharging slag and fines.

26. An installation for treating a gaseous effluent coming in particular from an installation for incinerating household refuse or other waste according to either one of Claims 24 and 25, **characterised in that** the means (25) for introducing a functional chemical composition (CC) are spraying means.

27. An installation for treating a gaseous effluent coming in particular from an installation for incinerating household refuse or other waste according to any one of Claims 24 to 26, **characterised in that** the introduction/spraying means (25), namely the spraying members (41), are directed downwards, where the furnace (2) is situated.

28. An installation for treating a gaseous effluent coming in particular from an installation for incinerating household refuse or other waste according to any one of Claims 24 to 27, **characterised in that** the introduction/spraying means (25), namely the spraying members (41), are at a distance from the furnace (2), namely from its hearth (27).

29. An installation for treating a gaseous effluent coming in particular from an installation for incinerating household refuse or other waste according to any one of Claims 24 to 28, **characterised in that** the introduction/spraying means (25) are arranged on the one hand according to a point or linear or surface zone, on the other hand at one or more levels of the tower (5).

30. An installation for treating a gaseous effluent coming in particular from an installation for incinerating household refuse or other waste according to one of Claims 24 to 29, **characterised in that** the introduction/spraying means are arranged so as to be retractable from a normal position of use where they are placed, at least as regards the spraying members (41), in the tower (5), to a retracted position in particular for maintenance or when the installation is halted, outside the tower (5).

31. An installation for treating a gaseous effluent coming in particular from an installation for incinerating household refuse or other waste according to any one of Claims 24 to 30, **characterised in that** the spraying means (25), namely the spraying members (41), are arranged able to slide substantially radially with respect to the axis (6) of the tower (5).

32. An installation for treating a gaseous effluent coming in particular from an installation for incinerating household refuse or other waste according to any one of Claims 24 to 31, **characterised in that** the introduction/spraying means (25) comprise at least one pipe (45) ending on one side with a curved end part (47) provided with spraying members (41) and comprising on the opposite side connectors (51, 57) for ducts of means (49, 50) for supplying the substances or agents of the functional chemical composition and the air, or more generally, the spraying carrier gas.

33. An installation for treating a gaseous effluent coming in particular from an installation for incinerating household refuse or other waste according to any one of Claims 24 to 32, **characterised in that** the spraying members (41) provide spraying in the form of an open cone providing a suitably homogeneous spatial distribution of the functional chemical composition (CC) in the zone of the tower (5) where it is introduced into the gaseous effluent (EG).

34. An installation for treating a gaseous effluent coming in particular from an installation for incinerating household refuse or other waste according to any one of Claims 30 to 33, **characterised in that** it comprises means (42) for moving, in particular sliding, the spraying means (25) between their position of use and their retracted position.

35. An installation for treating a gaseous effluent coming in particular from an installation for incinerating household refuse or other waste according to Claim 34, **characterised in that** the moving means (42) are slaved to the running and stopping of the installation.

36. An installation for treating a gaseous effluent coming in particular from an installation for incinerating household refuse or other waste according to Claim 32, **characterised in that** it comprises an elbowed pipe (45).

37. An installation for treating a gaseous effluent coming in particular from an installation for incinerating household refuse or other waste according to any one of Claims 24 to 36, **characterised in that** thermal protection means and means for protecting from clogging are associated with the spraying means (25).

38. An installation for treating a gaseous effluent coming in particular from an installation for incinerating household refuse or other waste according to Claim 32, **characterised in that** the ducts of the supply means (49, 50) are ductile or articulated wholly or partially.

39. An installation for treating a gaseous effluent coming in particular from an installation for incinerating household refuse or other waste according to any one of Claims 24 to 38, **characterised in that**, with the introduction/spraying means (25), there are associated means (48, 49) for storage and supply of sludge (B) coming from the treatment of domestic waste water or industrial manufacturing waste and means (50) for supply of a spraying carrier gas such as compressed air (A).

40. An installation for treating a gaseous effluent coming in particular from an installation for incinerating household refuse or other waste according to any one of Claims 24 to 39, **characterised in that** it comprises means (54) for pre-treatment of the sludge (B) in order to dehydrate it to the required pasty consistency in order to obtain the required dry matter content, such as a centrifuge.

41. An installation for treating a gaseous effluent coming in particular from an installation for incinerating household refuse or other waste according to any one of Claims 24 to 40, **characterised in that** means (58, 59) for storage/supply of water and/or ammonia or equivalent are associated with the introduction/spraying means (25).

42. An installation for treating a gaseous effluent coming in particular from an installation for incinerating household refuse or other waste according to any one of Claims 24 to 41, **characterised in that**, with the means (48, 49, 50, 58, 59) for storage/supply of sludge, compressed air or equivalent, water, ammonia or equivalent, there are associated slide valves and flap valves (56) for stopping or controlling the respective flow rates so as to make it possible to adjust the composition of the functional chemical composition (CC).

43. An installation for treating a gaseous effluent coming in particular from an installation for incinerating household refuse or other waste according to Claim 42, **characterised in that** it comprises means (55) capable of measuring the NOx content of the gaseous effluent (EG) downstream of the spraying means (25), coupled with the slide valves and flap valves (56) for stopping or controlling the flow rates with a view to adjusting the composition of the functional chemical composition (CC).

44. An installation for treating a gaseous effluent coming in particular from an installation for incinerating household refuse or other waste according to any one of Claims 24 to 43, **characterised in that** it also comprises a tank (67) for discharge of the rinsing water from the introduction/spraying means (25) situated outside the tower (5), against it, in the immediate proximity of and below the introduction/spraying means (25), in particular the spraying members (41) in the retracted position.

45. An installation for treating a gaseous effluent coming in particular from an installation for incinerating household refuse or other waste according to any one of Claims 24 to 44, **characterised in that** it is coupled and combined with an installation for treating domestic waste water or industrial manufacturing waste, the latter installation comprising means for drawing off sludge associated with the sludge storage and supply means (48, 49), respectively the dehydration pre-treatment means (54), of the incineration installation.
